# EUROPÄISCHE PATENTANMELDUNG

(11) **EP 4 169 881 A1**
(43) Veröffentlichungstag der Anmeldung: **26.04.2023**
(21) Anmeldenummer: 22202863.1
(22) Anmeldetag: 20.10.2022
(51) Int. Cl.: C02F 1/461, C02F 1/463, C02F 101/10

(54) **ELEKTROLYTISCHE REAKTOREN**

(30) Priorität: 21.10.2021 DE 102021127350
(71) Anmelder: Fraunhofer-Gesellschaft zur Förderung der angewandten Forschung e.V., 80686 München (DE)
(72) Erfinder: Krupp, Sebastian, 70569 Stuttgart (DE); Bohn, Michael, 70569 Stuttgart (DE); Egner, Siegfried, 74740 Adelsheim (DE)
(74) Vertreter: DREISS Patentanwälte PartG mbB

(57) **Zusammenfassung**

Die Erfindung betrifft einen elektrolytischen Reaktor, insbesondere zum Abtrennen von Phosphat aus phosphathaltigen Flüssigkeiten und/oder Rückgewinnung von Phosphatsalzen, umfassend einen Zulauf (16) für eine Elektrolyseflüssigkeit und einen hieran anschließenden Strömungskanal (20), wobei in dem Strömungskanal (20) eine Magnesiumdosiereinheit (12) mit zwei Elektroden (22, 24) unterschiedlicher Polarität, wobei wenigstens eine der beiden Elektroden (22, 24) eine Opferelektrode (20) ist, angeordnet ist, wobei die Magnesiumdosiereinheit (12) als Freispiegelreaktor ausgebildet ist und wobei der Magnesiumdosiereinheit (12) eine Misch-/Sedimentationseinheit (14) in Strömungsrichtung nachgeschaltet ist, die einen Feedzulauf (40) für die phosphathaltigen Flüssigkeiten und einen Abzug (26) für die gereinigte Flüssigkeit für das gewonnene Phosphatprodukt aufweist.

## Beschreibung

In der Verfahrenstechnik werden zur Fällung und/oder Gewinnung von Phosphor aus phosphathaltigen Flüssigkeiten, beispielsweise aus Prozess- oder Abwässern - im Folgenden Prozesswasser oder Elektrolyt genannt - elektrolytische Reaktoren eingesetzt. Diese weisen eine Kathode und eine Anode auf. Bei Betrieb des Reaktors wird eine elektrische Spannung zwischen Kathode und Anode angelegt, wobei sich die Anode verzehrt (Opferanode). Die Opferanode ist üblicherweise aus Magnesium. Eine der Elektroden ist dabei oberhalb und die andere unterhalb eines Reaktionsraums oder Ionendosierraums, der mit Prozesswasser als Elektrolyt gefüllt ist, angeordnet.

Die Elemente Stickstoff und Phosphor sind neben anderen Elementen für das Pflanzenwachstum essentielle Stoffe. Diese sind meist als Ionen in festen oder flüssigen organischen Abfällen oder Abwässern enthalten. Zur Aufbereitung dieser Abfälle oder Abwässer, z.B. kommunaler Abwässer müssen diese Stoffe einerseits zum Schutz der Umwelt (Eutrophierung) entfernt werden. Andererseits ist es auch im Sinne der Nachhaltigkeit wichtig, diese zurückzugewinnen und z.B. als Pflanzendünger wieder verfügbar zu machen. Daher ist es notwendig, Stickstoff und Phosphat in eine für die Nutzung z.B. als Düngemittel geeignete anorganische Form umzuwandeln, z.B. durch Ausfällen als MAP. Phosphatsalze wie Magnesiumammoniumphosphat (MAP) sind hochwertige Pflanzenhilfsstoffe für die eine hohe Nachfrage besteht.

In der DE 10 2010 050 691 B3 und der DE 10 2010 050 692 B3 werden ein Verfahren und ein Reaktor zur Rückgewinnung von Phosphatsalzen aus einer Flüssigkeit beschrieben, wobei die Opferelektroden aus einem magnesiumhaltigen Material bestehen.

Weitere Verfahren zur Gewinnung von Phosphatsalzen sind in der DE 10 2014 207 842 C2 oder auch in der DE 10 2016 109 824 A1 offenbart.

Nachteilig bei den bekannten Vorrichtungen und Verfahren ist jedoch, dass nicht nur die Opferanode, sondern alle stromführenden Metallteile, welche mit dem Elektrolyten in Berührung kommen und in einem elektrischen Feld polarisiert sind, der Elektrolyse ausgesetzt sind. Das bedeutet, dass alle blanken Metallstellen im Reaktor, welche mit der Kontaktierung verbunden sind, bei entsprechender Polung, auch als Opferanode agieren.

Die Folgen an der oberen Elektrode sind: Metallische Befestigungsteile, wie Schrauben zur Befestigung der Kontaktkabel verlieren ihre Gewinde oder lösen sich im Extremfall ganz auf. Andere Kontaktelemente, wie z.B. Kabelschuhe lösen sich auf. Die Folgen an der unteren Elektrode sind: An Kontaktelementen kommt es zu Lochfraß und Korrosion oder in der Folge zu Verformungen. Dies führt zur Verschlechterung und stellenweise zum Verlust der Kontaktierung. Darüber hinaus erhöht dies den Wartungsaufwand des Reaktors, da die verschlissenen Teile ersetzt werden müssen.

Ferner treten ungewollte Fällungsprodukte auf. An allen Kontaktstellen zwischen Kontaktierungselement und Magnesiumelektrode kommt es zu Ablagerungen, die mehrheitlich aus Magnesiumhydroxid bestehen. Nach einiger Zeit wachsen die Ablagerungen zwischen den Kontaktelementen und der unteren Elektrode zu einer zusammenhängenden Schicht an. An den einzelnen Kontaktierungsstellen der oberen Elektrode bilden sich lokale Materialansammlungen. Diese Materialansammlungen können sich auch zwischen Kontaktelementen, wie Kontaktblechen, und Elektrode entwickeln und hinterlassen an ihrer Entstehungsstelle oftmals Mulden in der Elektrode.

Weitere Nachteile bestehen in der Gefahr des Überströmens der oberen Elektrode, da es konstruktiv bedingt zwischen dem Deckel des Reaktors und der oberen Magnesiumelektrode einen Spalt gibt. Durch die Zehrung der Elektroden wird dieser Spalt während des Betriebs stetig größer. Um Kurzschlussströmungen zwischen Deckel und Elektrode zu vermeiden muss dieser veränderliche Totraum verschlossen werden. Hierdurch sind zusätzliche konstruktive Elemente notwendig.

Das zu behandelnde Prozesswasser durchströmt das elektrische Feld zwischen Anode und Kathode. Hier gehen die freigesetzten Magnesiumionen in Lösung über. Durch die Bindung, die sie mit Phosphat und Ammonium eingehen, entstehen Struvitkristallkeime.

Das ausfallende Struvit kann insbesondere bei in Strömungsrichtung langen Reaktionsräumen oder -kanälen nicht in vollem Umfang aus dem Reaktor ausgetragen werden und im Reaktionskanal verbleibende Kristalle wachsen an. Ab einem bestimmten Zeitpunkt kommt es dadurch im Reaktor zur Verstopfung, d.h., der Reaktor setzt sich zu.

Schließlich ist es notwendig, um die Elektrode auf ihrer vollen Breite mit dem Elektrolyten zu beströmen, am Reaktoreingang Verteilerelemente zur Strömungsverteilung zu verbauen. Zwischen den Verteilerelementen und in den Löchern der Verteilerelemente besteht jedoch die Gefahr, dass sich Struvit anlagert. Infolgedessen werden Ablagerungen im Reaktionskanal schlechter ausgespült, da einzelne Löcher im Verteiler verstopfen und der Reaktionskanal nicht mehr in voller Breite angeströmt wird. Außerdem behindern diese Verstopfungen den Zufluss zum Reaktor und damit die eigentliche Freisetzung der Ionen.

Der Erfindung liegt die Aufgabe zugrunde, einen elektrolytischen Reaktor bereitzustellen, insbesondere zum Abtrennen von Phosphat aus phosphathaltigen Flüssigkeiten bzw. Prozesswasser und dessen Rückgewinnung als Phosphatsalze, welcher die oben genannten Nachteile vermeidet und insbesondere eine sichere Reaktionsführung gewährleistet, die eine geringere Gefahr von Ablagerungen von Struvit bedingt bei gleichzeitiger Verhinderung der ungewollten Elektrolyse von metallischen Bauteilen wie z. B. Kontaktelementen.

Die Erfindung wird durch eine Vorrichtung mit den Merkmalen des Anspruchs 1 gelöst. Vorteilhafte Weiterbildungen und Ausgestaltungen der Erfindung sind in den weitern abhängigen Ansprüchen beschrieben.

Der elektrolytische Reaktor umfasst dabei einen Zulauf für das zu behandelnde Prozesswasser (Elektrolyten) und einen hieran anschließenden Strömungskanal, wobei in dem Strömungskanal eine Magnesiumdosiereinheit mit zwei Elektroden unterschiedlicher Polarität, wobei wenigstens eine der beiden Elektroden eine Opferelektrode ist, angeordnet ist. Dabei ist vorgesehen, dass die Magnesiumdosiereinheit als Freispiegelreaktor ausgebildet ist und der Magnesiumdosiereinheit eine Misch-/Sedimentationseinheit in Strömungsrichtung nachgeschaltet ist, die einen Zulauf (Feed) für das phosphathaltige Prozesswasser und einen Abzug für das abgereicherte Prozesswasser sowie für das gewonnene Phosphatprodukt aufweist. Auf diese Weise wird erreicht, dass durch die Trennung der Zone der Elektrolyse und einer Mischzone mit Zugabe des phosphathaltigen Feedstroms und anschließender Sedimentationszone der Produkte, insbesondere in Form von Struvit-Kristallen ein Zusetzen des Reaktors bzw. der Elektrolyszone durch Struvitkristalle vermieden und so eine längere wartungs- und störungsfreie Betriebszeit ermöglicht wird.

Um bei hohen Phosphatkonzentrationen im Zulauf eine ausreichende Abreicherung von Phosphat zu erreichen, kann das Prozesswasser nach der Abscheidung der Kristalle durch Mischen mit dem Feed rezirkuliert werden.

Darüber hinaus bietet der Aufbau als Freispiegelreaktor - also mit offenem Flüssigkeitsspiegel - anstelle eines Druckreaktors mehr Gestaltungsspielraum für die Kontaktierung. Die Probleme der Überströmung der Elektroden und somit deren unkontrollierter Verzehr wird vermieden.

Besonders vorteilhaft ist, wenn die Opferelektrode nur bereichsweise mit der Elektrolyseflüssigkeit in Kontakt steht, wobei eine Kontaktierung der Opferanode oberhalb des Flüssigkeitsspiegels angeordnet ist. Dies wird durch die Gestaltung als Freispiegelreaktor ermöglicht. So kann z.B. vorgesehen sein, die Kontaktierung so anzuordnen, dass sie jeweils im trockenen Bereich der Elektroden stattfindet, insbesondere am oberen, der Elektrolyseflüssigkeit abgewandten Ende der Opferelektrode und die Elektrode jeweils nur geringfügig in die Elektrolyseflüssigkeit eintaucht. Auf diese Weise können freiwerdende Magnesiumionen direkt zur Misch-/Sedimentationseinheit weitergeleitet werden und dort in einer Mischzone mit dem phosphathaltigen Feedstrom zusammengemischt werden, so dass das Produkt, insbesondere Struvit gebildet wird.

Es kann vorgesehen sein, dass die Opferanode aus Elektrodenbarren gebildet ist, insbesondere aus Magnesiumbarren, die in einem vertikalen Fallschacht angeordnet sind und insbesondere federbelastet in Richtung auf den Strömungskanal gehalten sind. Vorteilhaft kann die im Betriebszustand obere Elektrode bewegbar sein und der unteren Elektrode zur Erhaltung einer konstanten Höhe des Reaktionsraums nachgeführt werden. Auf diese Weise kann die Elektrode bei Verzehr abgesenkt werden, so dass zu jeder Zeit ein gleichbleibender Kontakt zur Elektrolyseflüssigkeit besteht. Die Elektrodenbarren können vorzugsweise rechteckig aber auch insbesondere trapezoid im Querschnitt sein und mit ihren schrägen Seiten so angeordnet werden, dass sie sich ergänzen. Im Fall von Elektrodenbarren kann der am weitesten von der Elektrolysezone, also dem mit der Elektrolyseflüssigkeit in Kontakt stehenden Bereich bzw. dem Elektrolysespalt, entfernte Barren elektrisch kontaktiert sein. Durch die Verwendung von mehreren Barren in einem Fallschacht, wird die Betriebsdauer erhöht, aber gleichzeitig die Flexibilität durch Verwendung mehrere einfach zu händelnder Elektroden beibehalten. Insbesondere ist die Beladung mit Elektroden ohne aufwändige Demontage des Reaktors möglich, indem neue Elektroden im Fallschacht nachgefüllt werden.

Um einen Spalt für die Elektrolyse in definierter Höhe bereitzustellen, kann vorgesehen sein, dass sich die Opferanode auf einem Abstandshalter abstützen zur Bildung des Elektrolysespalts, in dem die Elektrolysezone vorliegt. Der Abstandshalter kann insbesondere aus Kunststoffrippen gebildet sein, so dass er keine Korrosion oder Reaktion durchläuft.

Bevorzugt ist die Länge der Magnesiumdosiereinheit in Strömungsrichtung sehr viel kürzer als der Strömungskanal, insbesondere höchstens halb so lang, insbesondere höchstens ein Drittel so lang und weiter insbesondere höchstens ein Viertel so lang. Der Strömungskanal hat dabei die Aufgabe die Strömung gleichmäßig auf die Kanalbreite bzw. die Breite des Reaktorraums zu verteilen. Da die eigentliche Reaktion nicht, wie bisher, im Bereich der Elektrolyse und der Elektroden stattfindet, kann dieser Bereich vergleichsweise kurz ausgestaltet werden, was das Risiko von Verunreinigungen und Ablagerungen reduziert.

Die eigentliche Reaktionszone erstreckt sich hier vom ausgangsseitigen Ende des Strömungskanals bis in die Mischzone der Misch-/Sedimentationseinheit hinein. Vorteilhaft ist dabei, dass die gebildeten Kristalle über die gesamte Reaktorbreite nach unten sedimentieren und dort dann abgezogen werden können. Besonders vorteilhaft weist die Misch-/Sedimentationseinheit hierzu eine Mischzone auf, an die sich nach unten eine Sedimentationszone anschließt, die insbesondere trichterförmig nach unten zuläuft. Dabei ist eine runde trichterform aber auch eine pyramidenförmige denkbar. Sind mehrere Misch-/Sedimentationseinheiten nebeneinander vorgesehen, weil mehrere Reaktoren parallelgeschaltet sind, so können diese zu einer einzigen rinnenförmigen Einheit zusammengeschaltet und verbunden sein. Die Einheit kann dann einen oder mehrere Abzüge für das Produkt aufweisen.

In der Mischzone wird durch den Zustrom des Feedstroms eine Durchmischung der durch die Elektrolyse beladenen Elektrolyseflüssigkeit erreicht und somit über den gesamten Querschnitt der Misch-/Sedimentationseinheit eine Reaktion mit anschließender Sedimentation bereitgestellt.

Das vorstehende wird dadurch verstärkt, dass der Abstand der Magnesiumdosiereinheit in Strömungsrichtung von der Misch-/Sedimentationseinheit sehr viel kürzer als der Strömungskanal ist, insbesondere höchstens halb so lang, insbesondere höchstens ein Drittel so lang und weiter insbesondere höchstens ein Viertel so lang.

Bevorzugt ist vorgesehen, dass der Strömungsquerschnitt in der Magnesiumdosiereinheit sehr viel breiter als hoch ist, insbesondere das Höhe-Verhältnis zu Breite mindestens 1:50, vorzugsweise mindestens 1:70 und vorzugsweise mindestens 1:100 beträgt. Hierdurch wird eine besonders gute Beladung der Elektrolyseflüssigkeit mit Ionen, vorzugsweise Magnesiumionen erreicht.

Vorteilhaft kann der Strömungsquerschnitt der Magnesiumdosiereinheit einen rechteckigen Querschnitt in Strömungsrichtung besitzen und über den gesamten Bereich der Magnesiumdosiereinheit einen konstanten Strömungsquerschnitt aufweisen. Hierdurch wird eine gleichmäßige Elektrolyserate erreicht.

Eine günstige Führung und daraus resultierende Beladung der Elektrolyseflüssigkeit wird erreicht, wenn der Zulauf der Elektrolyseflüssigkeit einen kreisförmigen Querschnitt aufweist und im Strömungskanal vor der Magnesiumdosiereinheit der Querschnitt in einen rechteckigen Querschnitt, der größer, insbesondere sehr viel größer als der kreisförmige Querschnitt ist, übergeht. Dies erzeugt eine gewünschte gleichmäßige Strömung. Der rechteckige Querschnitt ist dabei vorzugsweise mindestens doppelt, weiter vorzugsweise mindestens vierfach und weiter vorzugsweise mindestens zehnfach so groß wie der kreisförmige Querschnitt.

Die Dosierung des Magnesiums in die Elektrolyseflüssigkeit erfolgt dann in der Magnesiumdosiereinheit mittels den unter Spannung stehenden Elektroden. Bei der Elektrolyseflüssigkeit kann es sich um ein Filtrat handeln, das z.B. im Kreis geführt (rezikuliert) werden kann.

Dabei ist es generell vorgesehen, bei Elektroden aus magnesiumhaltigem Material, dass es bei Umsetzung von Phosphor zu folgender Reaktion kommt:

Mg²⁺ + NH₄⁺ + PO₄³⁻ + 6H₂O -> MgNH₄PO₄ - 6 H₂O,

wobei die Magnesiumionen an der Oberfläche einer Opferanode aus Magnesium freigesetzt werden. Die Elektroden führen hier zur elektrolytischen Rückgewinnung von Phosphor als auskristallisiertes Magnesium-Ammoniumphosphat (MAP) (Struvite) bei Mangel an Magnesium im Ausgangssubstrat.

Wird eine der beiden Elektroden oder beide Elektroden während der Reaktion verzehrt, ist es vorteilhaft, wenn wie beschrieben der Abstand zwischen den Elektroden stets gleichbleibt, und infolgedessen das elektrische Feld zwischen Anode und Kathode stets gleichbleibt und so optimale Umsetzungsraten erreicht werden können. Dabei ist es vorteilhaft hinsichtlich Ablagerungen, wenn keine der beiden Elektroden permanent als Kathode oder Anode genutzt wird, sondern stets in gewissen Intervallen eine kurzzeitige Umpolung erfolgt. Ohne Umpolung kann es zu Ablagerungen auf der Kathode kommen. Durch die Umpolung werden diese Ablagerungen zusammen mit dem Verzehr der Anode abgelöst und können aus dem Reaktor mit dem Flüssigkeitsstrom ausgetragen werden. Sofern erfindungsgemäß nicht vorgesehen ist, dass beide Elektroden als Opferelektrode vorgesehen sind, ist es bevorzugt, dass die Kathode, die sich nicht verzehrt, aus Edelstahl oder einem anderen korrosionsfesten elektrisch leitenden Material hergestellt ist.

Es ist für die Prozessführung von besonderer Bedeutung, dass ein konstanter Abstand zwischen den Oberflächen von Anode und Kathode unabhängig vom Verzehr der jeweiligen Opferelektrode ist und dieser vorzugsweise über die gesamte Fläche der Elektroden gleichbleibt. Die Oberflächen, die die Elektrolysezone begrenzen, durch die die Elektrolyseflüssigkeit fließt, sind vorzugsweise eben, wobei der Reaktionsraum vorzugsweise einen rechteckigen Querschnitt in Strömungsrichtung aufweist und darüber hinaus auch die Elektroden eine kubische Form bzw. in einer Draufsicht eine rechteckige Form aufweisen, die sich durch den Verzehr nicht wesentlich verändert. Durch die konstante Geometrie des Reaktionsraums wird das elektrische Feld auch während des Verzehrs der Elektroden konstant gehalten und es können definierte und hohe Umsetzungsraten bei minimalem Energieverbrauch erreicht werden. Der Elektrolysespalt bleibt dabei über die gesamte Strömungslänge derselbe, insbesondere in Breite und Höhe konstant.

Eine Nachführung der einen Elektrode zur anderen Elektrode kann beispielsweise mit Hilfe der Schwerkraft, aber auch unterstützt mit einer oder mehreren Federn und/oder einem oder mehreren Aktuatoren erreicht werden. Wenn die Schwerkraft eingesetzt wird, um z. B. eine im Betriebszustand obere Elektrode einer unteren Elektrode nachzuführen, können hierzu neben der Schwerkraft oder Federn auch elektrische, pneumatische oder hydraulische Aktuatoren eingesetzt werden.

Darüber hinaus ist es auch möglich, insbesondere, wenn Aktuatoren zur Nachführung einer Elektrode vorgesehen sind, eine Abstandsregelung oder -steuerung für den Abstand zwischen den Elektroden vorzusehen, mit Sensoren, die als Teil eines Regelkreises den Verzehr bzw. die verbliebene Dicke einer oder beider Elektroden erfassen. Hierzu sind Sensoren am Markt bekannt.

Vorteilhaft können mehrere Dosiereinheiten mit einem Misch-/Sedimentationseinheit verbunden sein und zusammenwirken.

Vorteilhaft können auch mehrere Reaktoren parallelgeschaltet werden und über eine gemeinsame Abscheidung zusammengefasst werden.

Des Weiteren ist es möglich, um den im Reaktor ablaufenden Prozess und den Verzehr der Opferelektroden erfassen zu können, Mittel zur Erfassung der Position der Elektroden vorzusehen. Dabei kann es sich beispielsweise um Positionssensoren in beliebiger Bauart handeln. Diese können vorzugsweise bewegbar an dem Gehäuse des Reaktors oder an der Elektrode befestigt sein. Damit kann der Verzehr der Elektroden auf einfache Weise und sehr zuverlässig überwacht werden.

Schließlich sind auch Mittel zur Erfassung des elektrischen Stroms, der zwischen den Elektroden fließt, und/oder der elektrischen Spannung, die zwischen den Elektroden anliegt, möglich. Dadurch lässt sich der Prozess, der in dem Reaktor abläuft, einfach und zuverlässig überwachen. Eventuelle Störungen des Prozesses führen zur Änderung des elektrischen Stroms und/oder der elektrischen Spannung und können somit einfach detektiert werden.

Besonders bevorzugt besteht die Opferelektrode aus einem magnesiumhaltigen Werkstoff. Dabei kann auch mehr oder weniger reines Magnesium als Elektrodenwerkstoff vorgesehen sein. Die zweite Elektrode kann aus Edelstahl hergestellt sein, da dieser Werkstoff elektrisch leitend ist und von dem zu behandelnden Prozesswasser in dem Reaktor nicht angegriffen wird.

Weitere Vorteile und vorteilhafte Ausgestaltungen der Erfindung sind in der nachfolgenden Zeichnung dargestellt.

Dabei zeigen:
- Figur 1a:: eine Schnittdarstellung eines ersten Ausführungsbeispiels;
- Figur 1b:: eine Draufsicht auf den Reaktor gemäß Figur 1a;
- Figur 2a-d:: ein alternatives Ausführungsbeispiel des Reaktors;
- Figur 3a-c:: ein weiteres alternatives Ausführungsbeispiel des Reaktors.

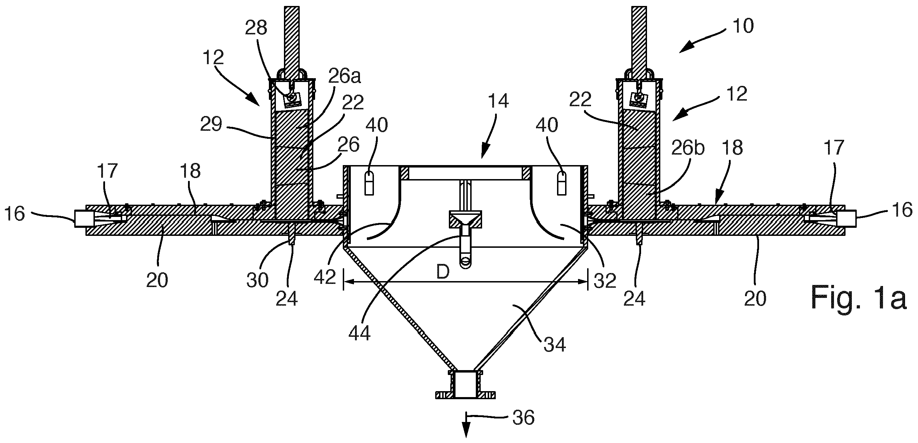

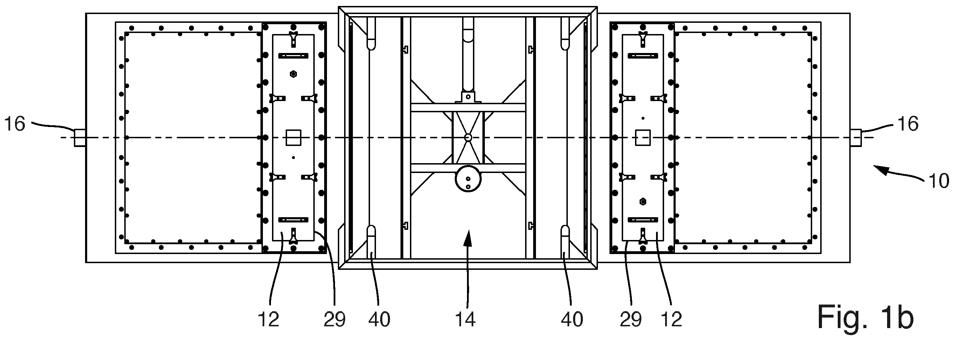

Dabei zeigen die Figuren 1a und 1b einen ersten erfindungsgemäßen Reaktor. Der Reaktor ist hierbei ein elektrolytischer Reaktor und ist in seiner Gesamtheit mit dem Bezugszeichen 10 versehen. Dieser umfasst zwei Magnesiumdosiereinheiten 12 sowie eine Misch-/Sedimentationseinheit 14. Die beiden Magnesiumdosiereinheiten 12 sind dabei an gegenüberliegenden Seiten der Misch-/Sedimentationseinheit 14 angeordnet. Dabei ist jeweils ein Zulauf 16 vorgesehen, der über einen ersten Strömungsabschnitt 17 von einem kreisförmigen in einen rechteckigen Querschnitt überführt wird. In einem weiteren Strömungsabschnitt 18 wird der rechteckige Querschnitt in Höhe und Breite verändert, um dann im Verlauf des Strömungskanals 20 in die Magnesiumdosiereinheit 12 überzugehen. Hierdurch wird die Strömung vergleichmäßigt und eine möglichst geringe Höhe des Strömungsquerschnitts im Vergleich zur Breite erzielt, um eine möglichst große Menge Magnesium elektrolytisch zudosieren zu können. Darüber hinaus sind zwei Elektroden 22 und 24 vorgesehen, die den Strömungskanal 20 zumindest abschnittsweise zwischen sich einschließen, wobei die obere Elektrode 22 als Opferelektrode ausgebildet ist und vorzugsweise aus trapezoiden Magnesiumbarren 26 besteht, die sich jeweils mit ihren schrägen Seitenflächen ergänzen. Die Elektrode 22 ist dabei über ein federndes Element, (nicht dargestellt) in Richtung auf den Strömungskanal 20 belastet. Die Magnesiumbarren 26 sind in einem von oben befüllbaren Fallschacht 29 aufgenommen. Die elektrische Kontaktierung der Elektrode 22 erfolgt über ein Kontaktelement 28, das am obersten hier mit 26a bezeichneten Elektrodenbarren angreift und kontaktiert wird.

Die Magnesiumdosiereinheit 12 stellt eine Elektrolysezone oder einen Elektrolysespalt bereit und ist gegenüber der Umgebung offen, sodass es sich nicht um einen Druckreaktor, sondern ein Freispiegelreaktor handelt. Der unterste der Elektrodenbarren 26b ragt mit seinem unteren Ende in den Strömungskanal 20 hinein und wird dort durch die Elektrolyseflüssigkeit, die den Strömungskanal 20 durchströmt, benetzt, sodass Magnesiumionen durch die Elektrolyse in die Elektrolyseflüssigkeit übergehen und die Elektrode 22 verzehrt wird. Über (hier nicht dargestellte) Federbelastung wird die Elektrode 22 stets nachgeführt in Richtung auf den Strömungskanal 20.

Zur Konstanthaltung des Querschnitts des Strömungskanals 20 ist ein Abstandhalter (nicht dargestellt), vorzugsweise aus Kunststoffrippen vorgesehen, auf dem sich der unterste Elektrodenbarren 26b abstützt. Im Ausgang des Strömungskanals 20 und im Eintritt in die Misch-/Sedimentationseinheit 14 erfolgt dann die Reaktion des Magnesiums mit dem Phosphor und dem Ammonium eines phosphathaltigen Feedstroms, dessen Zuläufe mit dem Bezugszeichen 40 versehen sind. Die Zudosierung des Feedstroms erfolgt an allen Ecken der pyramidenförmigen, sich nach unten verjüngenden Misch- und Sedimentationseinheit14. Die Misch-/Sedimentationseinheit 14 umfasst eine Mischzone 32, in der ein Feedstrom zugeführt wird sowie eine Sedimentationszone 34. Die Durchmischung der Elektrolyseflüssigkeit, insbesondere eines Filtrats mit dem Feedstrom führt dazu, dass über die gesamte Querschnittsfläche D der Misch-/Sedimenationseinrichtung 14 eine Reaktion erfolgt und das erzeugte Produkt in Richtung des Pfeils 36 ausfällt und aufgefangen werden kann. Das Produkt wird filtriert und die Flüssigkeit rezirkuliert.

Auf die vorliegende Weise wird insbesondere erreicht, dass keine elektrische Kontaktierung 28, 30 der Elektroden 22, 24 mehr mit der Flüssigkeit in Kontakt kommt, wodurch die Gefahr von Korrosion verringert ist. Darüber hinaus ist die eigentliche Zone der Zudosierung von Magnesiumionen sehr kurz, sodass in diesem Bereich keine Ablagerungen zu erwarten sind. Viel mehr erfolgt der wesentliche Teil der Reaktion erst in der Misch-/ Sedimentationseinheit, und kann dann als Produkt gleich aus der Mischzone 32 in die Sedimentationszone 34 gelangen. Auf diese Weise kann die Betriebsdauer des Reaktors signifikant verlängert werden.

Um weitere Ablagerungen zu verhindern kann darüber hinaus vorgesehen sein, dass kurzfristige Umpolungen der Elektroden 22, 24 vorgenommen werden, wodurch Ablagerungen an der Katode mit dem Flüssigkeitsstrom in den Behälter der Misch-/Sedimentationseinheit 14 eingetragen werden. Besonders bevorzugt ist es dabei, wenn der Bereich den die Elektroden 22, 24 im Strömungskanal 20 überdecken zur Bildung der Magnesiumdosiereinheit 12 sehr viel kürzer in Strömungsrichtung ist als die Gesamtlänge des Strömungskanals 20. Insbesondere kann dieser Bereich weniger als ¼ der Länge des gesamten Strömungskanals 20 ausmachen. Darüber hinaus ist auch der Abschnitt nach der Dosiereinheit 12 bis zur Misch-/ Sedimentationseinheit 14 sehr viel kürzer als die Gesamtlänge des Strömungskanals 20. Auf diese Weise wird sichergestellt, dass die Reaktion und damit auch das Entstehen von Struvit-Kristallen erst in der Misch-/Sedimentationseinheit 14 erfolgt. Auf die beschriebene Weise, können dabei Probleme, die sich in der Praxis bei entsprechenden Reaktoren gezeigt haben, vermieden werden.

Der Elektrolysespalt zwischen den beiden Elektroden 22 und 24 ist vorzugsweise so ausgebildet, dass die Länge der Elektrolysezone sehr viel länger ist als die Höhe des Spaltes S. Insbesondere ist die Spalthöhe S auch sehr viel kleiner als die Breite B der Elektroden 22, 24. Hierbei sind insbesondere ein Höhen-/Längenverhältnis von 1:150 und ein Höhen-/Breitenverhältnis von mindestens 1:100 vorgesehen. Auf diese Weise werden gute Elektrolyseraten erreicht. Der Spalt besitzt dabei einen rechteckigen Querschnitt der insbesondere größer, insbesondere sehr viel größer als der kreisförmige Querschnitt des Zulaufs 16 ist. Dies ist gut in Figur 1b zu erkennen.

Tritt die Strömung mit einem möglichst gleichmäßigen Strömungsquerschnitt und möglichst gleichzeitig in die Elektrolysezone ein, können über die Elektrolysezone besonders gute Raten erreicht werden.

Darüber hinaus ist vorgesehen, dass die Zuführung des Feedstroms 40 über Leitbleche 42 erfolgt, die einen gleichmäßigen Eintrag gewährleisten. Die Strömungsleitwände dienen der Erzeugung einer Strömungswalze generiert durch die aus dem Reaktionsraum austretende Strömung 16. In diese wird der Feedstrom 40 eingemischt.

Schließlich ist ein Ablauf 44 vorgesehen, der insbesondere der Einstellung des Füllstandes in der Misch- und Sedimentionseinheit 14 dient.

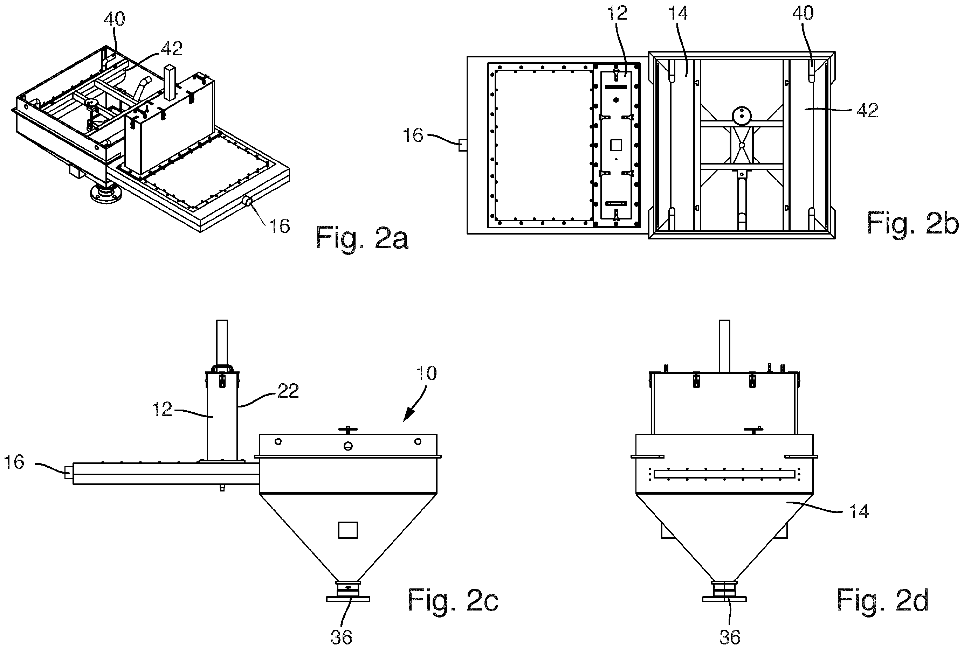

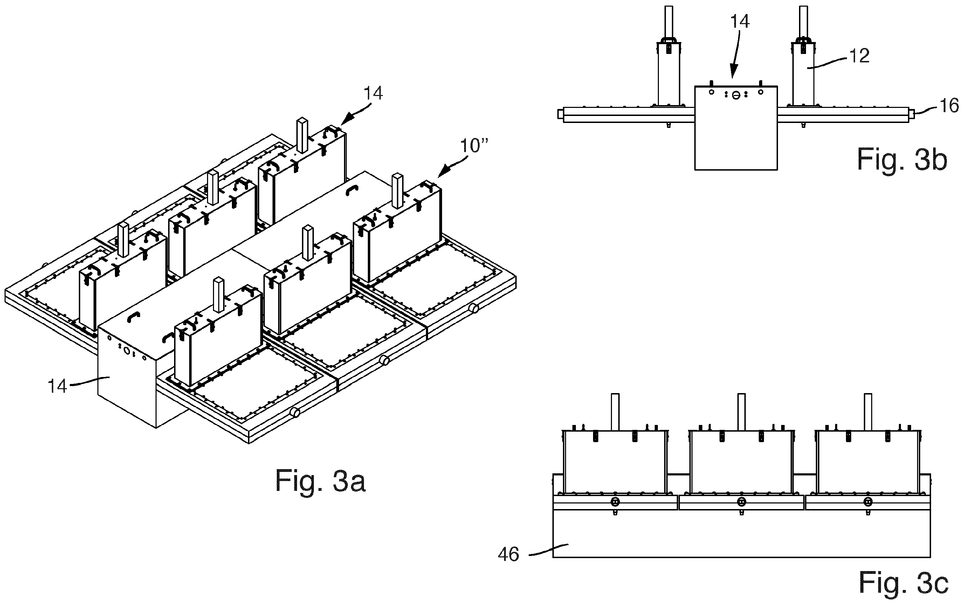

Figur 2 und 3 zeigt nun analoge Gestaltungen, wobei sich Figur 2 dadurch unterscheidet, dass die Zuführung mit dem Zulauf 16 lediglich von einer Seite erfolgt. Im Übrigen ist der Reaktor 10' gleich aufgebaut zum Reaktor gemäß Figur 1.

Der Reaktor 10" umfasst drei Reaktoren 10 gemäß Figur 1, die parallelgeschaltet sind und jeweils zwei Zuläufe 16 aufweisen. Die Misch- und Sedimentationseinheiten 14 ist durchgehend als Rinne 46 ausgebildet, wie Figur 3b genommen werden kann. Alternativ können diese auch separat ausgebildet sein und jeweils trichterförmig gestaltet sein. Die Dosiereinheiten 12 sind dabei jeweils separat ausgestaltet. Auf diese Weise können die Reaktoren 10 an die jeweiligen Anforderungen größenmäßig angepasst werden.

## Patentansprüche

1. Elektrolytischer Reaktor, insbesondere zum Abtrennen von Phosphat aus phosphathaltigen Flüssigkeiten und/oder Rückgewinnung von Phosphatsalzen, umfassend einen Zulauf (16) für eine Elektrolyseflüssigkeit und einen hieran anschließenden Strömungskanal (20), wobei in dem Strömungskanal (20) eine Magnesiumdosiereinheit (12) mit zwei Elektroden (22, 24) unterschiedlicher Polarität, wobei wenigstens eine der beiden Elektroden (22, 24) eine Opferelektrode (22) ist, angeordnet ist **dadurch gekennzeichnet, dass** die Magnesiumdosiereinheit (12) als Freispiegelreaktor ausgebildet ist und wobei der Magnesiumdosiereinheit (12) eine Misch-/Sedimentationseinheit (14) in Strömungsrichtung nachgeschaltet ist, die einen Feedzulauf (40) für die phosphathaltigen Flüssigkeiten und einen Abzug (36) für die gereinigte Flüssigkeit und für das gewonnene Phosphatprodukt aufweist.

2. Reaktor nach Anspruch 1, **dadurch gekennzeichnet, dass** die Opferelektrode (22) nur bereichsweise mit der Elektrolyseflüssigkeit in Kontakt steht, wobei eine Kontaktierung (28) der Opferelektrode (22) oberhalb eines Flüssigkeitsspiegels angeordnet ist.

3. Reaktor nach Anspruch 1, **dadurch gekennzeichnet, dass** die Opferelektrode (22) aus Elektrodenbarren (26) gebildet ist, insbesondere aus Magnesiumbarren, die in einem vertikalen Fallschacht (29) angeordnet sind und insbesondere federbelastet in Richtung auf den Strömungskanal (20) gehalten sind.

4. Reaktor nach Anspruch 1 oder 2, **dadurch gekennzeichnet, dass** sich die Opferelektrode (22) auf einem Abstandshalter abstützt zur Bildung des Elektrolysespalts, und der Abstandshalter insbesondere aus Kunststoffrippen gebildet ist.

5. Reaktor nach einem oder mehreren der vorangehenden Ansprüche, **dadurch gekennzeichnet, dass** die Länge der Magnesiumdosiereinheit (12) in Strömungsrichtung sehr viel kürzer als der Strömungskanal (20) ist, insbesondere höchstens halb so lang, insbesondere höchstens ein Drittel so lang und weiter insbesondere höchstens ein Viertel so lang.

6. Reaktor nach einem oder mehreren der vorangehenden Ansprüche, **dadurch gekennzeichnet, dass** der Abstand der Magnesiumdosiereinheit (12) in Strömungsrichtung von der Misch-/Sedimentationseinheit (14) sehr viel kürzer als der Strömungskanal (20) ist, insbesondere höchstens halb so lang, insbesondere höchstens ein Drittel so lang und weiter insbesondere höchstens ein Viertel so lang.

7. Reaktor nach einem oder mehreren der vorangehenden Ansprüche, **dadurch gekennzeichnet, dass** der Strömungsquerschnitt in der Magnesiumdosiereinheit (12) sehr viel breiter als hoch ist, insbesondere das Höhe-Verhältnis zu Breite mindestens 1:50, vorzugsweise mindestens 1:70 und vorzugsweise mindestens 1:100 beträgt.

8. Reaktor nach einem der vorangehenden Ansprüche, **dadurch gekennzeichnet, dass** der Strömungsquerschnitt der Magnesiumdosiereinheit (12) einen rechteckigen Querschnitt in Strömungsrichtung besitzt und über den gesamten Bereich der Magnesiumdosiereinheit (28) einen konstanten Strömungsquerschnitt aufweist.

9. Reaktor nach einem oder mehreren der vorangehenden Ansprüche, **dadurch gekennzeichnet, dass** die im Betriebszustand obere Elektrode (22) bewegbar ist und der unteren Elektrode (24) zur Erhaltung einer konstanten Höhe (S) des Elektrolysespalts nachgeführt werden kann.

10. Reaktor nach einem oder mehreren der vorangehenden Ansprüche, **dadurch gekennzeichnet, dass** der Zulauf (16) der Elektrolyseflüssigkeit einen kreisförmigen Querschnitt (17) aufweist und im Strömungskanal (20) vor der Magnesiumdosiereinheit (12) der Querschnitt in einen rechteckigen Querschnitt, der insbesondere sehr viel größer als der kreisförmige Querschnitt ist, übergeht.

11. Reaktor nach einem oder mehreren der vorangehenden Ansprüche, **dadurch gekennzeichnet, dass** die Misch- und Sedimentationseinheit (14) trichterförmig, insbesondere pyramidenförmig, gestaltet ist oder als nach unten zulaufende Rinnen (46).
